# EUROPEAN PATENT APPLICATION

(11) **EP 2 785 002 A1**
(43) Date of publication of application: **01.10.2014**
(21) Application number: 13161545.2
(22) Date of filing: 28.03.2013
(51) Int. Cl.: H04L 29/06, H04W 4/02, H04W 4/22

(54) **Geoscoping for enhancing security in public warning systems**

(71) Applicant: Nokia Solutions and Networks Oy, 02610 Espoo (FI)
(72) Inventor: Horn, Guenther, 80331 Munich (DE); Jerichow, Anja, 81735 Munich (DE)
(74) Representative: Borgström, Markus

(57) **Abstract**

There are provided measures for geoscoping for enhancing security in public warning systems. Such measures exemplarily comprise retrieving geoscope information being associated with a public key dedicated for verifying signed warning messages of a public warning system, wherein the geoscope information defines a scope of validity of information verifiable by said public key, receiving a signed warning message of the public warning system, verifying a signature of the received signed warning message using said public key, determining whether or not a current location is within the scope defined by the retrieved geoscope information, and accepting the received signed warning message if both the signature of the signed warning message is successfully verified using said public key and the current location is determined to be within the scope defined by the retrieved geoscope information.

## Description

### Field

The present invention relates to enhancing security in public warning systems. More specifically, the present invention exemplarily relates to measures (including methods, apparatuses and computer program products) for geoscoping for enhancing security in public warning systems.

### Background

In cellular communication systems such as 3GPP systems, public warning systems (PWS) are currently being deployed, which are used for warning mobile users about e.g. disaster situations (like earthquakes, tsunamis, etc.). Currently known PWS deployments include e.g. the Earthquake and Tsunami Warning Service (ETWS), the Commercial Mobile Alert System (CMAS), also known as Wireless Emergency Alerts (WEA) and Personal Localized Alerting Network (PLAN), the Korean Public Alert System (KPAS), and the European Public Warning System (EU-ALERT).

In 3GPP systems, PWS-based warning of mobile users is typically realized by way of a cell broadcast, wherein PWS warning messages are broadcast as CBS messages to defined cell broadcast areas, which may comprise of one or more cells, or may comprise an entire PLMN (i.e. operator network). Individual PWS warning messages are assigned their own geographical coverage areas by mutual agreement between the information provider and the network operator. This is typically done in such a way that the information provider includes geographical data in a CBS message and the network operator can map this data to a set of cells, over which the CBS message is to be broadcast.

In PWS, a regulator, a government, or any other public safety authority acts as a CBE (Cell Broadcast Entity), which is the originator of PWS warning messages, and many of such CBEs can exist in a certain geographical coverage area. Each CBE is connected to one or more networks, e.g. a PLMN of a network operator, via a CBC (Cell Broadcast Centre), which is typically part of the operator's core network. Hence, a CBE sends PWS warning messages to the UEs in its geographical coverage area over cell broadcast using an operator's network.

In order to ensure security in PWS, including e.g. authentication of a PWS message originator and integrity of broadcast PWS messages, certain efforts are necessary. Such security efforts are for example captured in the Technical Report 3GPP TR 33.869.

As security requirements for PWS, the use of digital signatures for PWS messages is adopted. That is, any PWS warning message is digitally signed as a means of security in order to provide authentication of the sender and integrity of the message. Thus, a public key must be available to the UE receiving a PWS message so that it can verify the signed warning message. Generally, the verification at the UE can be either accomplished in a direct manner, when the public key available to the UE corresponds to the private key, with which the message was signed (by the CBE), or in an indirect manner, when the public key available to the UE corresponds to the private key, with which a certificate for the public key of the signing entity (e.g. CBE) was signed (by a CA).

Currently, various approaches for protecting the distribution of the public key, i.e. for securely distributing of the public key, which is used to verify a signed warning message, are under consideration. The currently considered approaches include the NAS-based approach, the GBA-based approach and the certificate-based approach.

In the following, the certificate-based approach is exemplified for protecting the distribution of the public key, i.e. for securely distributing of the public key. However, the thus explained problems thereof similarly arise for the NAS-based approach and the GBA-based approach as well. Accordingly, the following explanations regarding the certificate-based approach are made for illustrative purposed by way of example only. An implicit certificate-based approach for PWS allows broadcasting the warning message together with information that allows determining the public key, i.e. a certificate on the public key (e.g. of the CBE), which means that no separate public key distribution is necessary. In a generalized certificate-based approach for PWS, information that allows determining the public key, i.e. a certificate on the public key (e.g. of the CBE), is distributed in a message different from the warning message, e.g. a broadcast message chained to the relating warning message, thus requiring separate public key distribution. In both approaches, it is assumed that a set of root (top-level) Certification Authorities (CAs) are present, whose public keys are pre-installed/stored in all UEs. Namely, it is assumed that all UEs are pre-provisioned (or provisioned at the first usage) with one or more root CA public keys allowing the UE to verify the certificate on the public key of the CBE. These (root) CAs may be solely dedicated to issuing certificates for CBE public keys in PWS security. Responsibility for managing root CAs would lie with the authorities, and not with PLMN operators. It is assumed that each (root) CA is authorized to provide certificates only for CBEs in a certain region or certain regions, and not in some other regions, where a region could e.g. be a part of a country, a country, or a set of countries with a multilateral agreement (such as the European Union).

In the certificate-based approach, a CBE has to present its public key to a root CA, which then issues a certificate on this CBE's public key by signing it using the CA's signing key. By creating a certificate on the CBE's public key, the CA states that it has verified that the public key in the certificate belongs to this CBE and that this certificate can be verified by using the CA's public key (corresponding to its signing key). This certificate should be valid for a long period. If the CBE issues a warning message with security, it will sign the message using the CBE's signing key and attach the CA certificate on its public key (corresponding to its signing key). As mentioned above, if the certificate is an implicit certificate it can be included in the warning message itself, otherwise the certificate may have to be sent in an additional broadcast message relating to the warning message or distributed in some other way beforehand.

Although CBEs and CAs are considered to be deployed in secure locations, the design of a PWS security system should take into account that they may become compromised. Accordingly, a PWS security system should be capable of limiting the consequences of such a compromise of a CBE and/or a CA. Such compromise may lead to the disclosure of a secret key of a CBE and/or a CA to an attacker, wherein the secret key would be a private signing key of the CA and/or CBE.

Specifically, the following problem arises in the case of a compromised CBE and/or CA in the context of PWS security.

In case of a CBE compromise, it may be assumed that the signing key of the CBE is compromised by an attacker, i.e. it becomes known to him. Then the attacker can forge signatures on warning messages of his choice. He can further attach the certificate issued by the CA on the public key of the CBE, if this certificate has already been provisioned to the CBE. Otherwise, the attacker can attach the identity of the CA who issued the certificate, if the certificate can be assumed to be already available in the UE. Because the public key has been signed by a CA whose public key is stored in the UE's key store, the UE would verify it as trustworthy. That is, a UE would receive this message and verify the signature without having any suspicion of the attack, because it has the root CA public key stored on its list.

While a compromise of a signing key will always have serious consequences, the consequences are significantly aggravated in the case under consideration here, i.e. in a PWS deployment. This is because the compromise of a CBE in a particular region can impact all other regions in the world, because the UE will accept a signed warning message as long as it can verify the signature on the warning message with just any of the root CA public keys in its key store. Hence, a global impact of a regional security breach is possible in a PWS deployment. As long as such a global impact of a regional security breach is possible, the PWS security solution will prove unacceptable to most governments and regulators, as, in general, governments and regulators will trust equipment in their own areas, and will be ready to assume responsibility for any problems caused there, but they will not accept that a security breach in an area under the control of an arbitrary other government and regulator (e.g. in a different country) can have a serious negative impact in their own country.

In case of a CA compromise, it may be assumed that the signing key of the CA for a specific region is compromised by an attacker, i.e. it becomes known to him. Then the attacker can prepare a certificate for any public key (of any CBE), for which the attacker knows the private key (e.g. because the attacker has created the public/private key pair himself), and can thus impersonate a CBE. The attacker can then, in particular, perform all attacks he could perform with a compromised CBE signing key, as outlined above. Similarly, if the registration authority associated with the CA does not properly check the identity and authorization of a claimant submitting a public key for certification, an attacker can obtain a certificate for a public key, for which the attacker knows the private key, under the name of a CBE, and can thus impersonate this CBE.

While a compromise of a signing key will always have serious consequences, the consequences are significantly aggravated in the case under consideration here, i.e. in a PWS deployment. This is because of similar reasons as described above for the case of a CBE compromise. In particular, a global impact of a regional security breach is possible in a PWS deployment, and therefore the PWS security solution will prove unacceptable to most governments and regulators.

In view of the above, currently considered approaches for protecting the distribution of the public key, i.e. for securely distributing of the public key, including the NAS-based approach, the GBA-based approach and the certificate-based approach, suffer from the problem that a regional security breach may have a global impact on security of the entire PWS deployment.

Accordingly, there is a demand for a solution to the above problem in order to enhance security in public warning systems. More specifically, there is a demand for a solution which is capable of preventing that a regional security breach may have a global impact on security of a public warning system.

### Summary

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a method comprising retrieving geoscope information being associated with a public key dedicated for verifying signed warning messages of a public warning system, wherein the geoscope information defines a scope of validity of information verifiable by said public key, receiving a signed warning message of the public warning system, verifying a signature of the received signed warning message using said public key, determining whether or not a current location is within the scope defined by the retrieved geoscope information, and accepting the received signed warning message if both the signature of the signed warning message is successfully verified using said public key and the current location is determined to be within the scope defined by the retrieved geoscope information.

According to an exemplary aspect of the present invention, there is provided an apparatus comprising means for retrieving geoscope information being associated with a public key dedicated for verifying signed warning messages of a public warning system, wherein the geoscope information defines a scope of validity of information verifiable by said public key, means for receiving a signed warning message of the public warning system, means for verifying a signature of the received signed warning message using said public key, means for determining whether or not a current location is within the scope defined by the retrieved geoscope information, and means for accepting the received signed warning message if both the signature of the signed warning message is successfully verified using said public key and the current location is determined to be within the scope defined by the retrieved geoscope information.

According to an exemplary aspect of the present invention, there is provided a computer program product comprising computer-executable computer program code which, when the program code is executed on a computer (e.g. a computer of an apparatus according to the aforementioned apparatus-related exemplary aspect of the present invention), is configured to cause the computer to carry out the method according to the aforementioned method-related exemplary aspect of the present invention.

The computer program product may comprise or may be embodied as a (tangible) computer-readable (storage) medium or the like, on which the computer-executable computer program code is stored, and/or the program is directly loadable into an internal memory of the computer or a processor thereof.

Further developments and/or modifications of the aforementioned exemplary aspects of the present invention are set out in the following.

By way of exemplary embodiments of the present invention, there is provided geoscoping for enhancing security in public warning systems.

By virtue of exemplary embodiments of the present invention, it is enabled to limit the impact of a regional security breach to the region where it occurred. Stated in other words, it can be prevented that the impacts of a regional security breach spread around the world, thereby enhancing the security of the distribution of the public key which is used to verify a signed warning message, including any one of the NAS-based approach, the GBA-based approach and the certificate-based approach.

Thus, improvement is achieved by methods, apparatuses and computer program products enabling/realizing geoscoping for enhancing security in public warning systems.

### Brief description of the drawings

In the following, the present invention will be described in greater detail by way of non-limiting examples with reference to the accompanying drawings, in which
Figure 1 shows a schematic diagram illustrating an exemplary architecture of a public warning system, for which exemplary embodiments of the present invention are applicable,
Figure 2 shows a unified modeling language activity diagram of a first example of a method according to exemplary embodiments of the present invention,
Figure 3 shows a flowchart of a second example of a method according to exemplary embodiments of the present invention,
Figure 4 shows a schematic diagram illustrating an exemplary architecture underlying a certificate-based public key distribution approach, for which exemplary embodiments of the present invention are applicable,
Figure 5 shows a signaling diagram of a first example of a geoscoping procedure for the certificate-based public key distribution approach according to exemplary embodiments of the present invention,
Figure 6 shows a signaling diagram of a second example of a geoscoping procedure for the certificate-based public key distribution approach according to exemplary embodiments of the present invention,
Figure 7 shows a signaling diagram of a third example of a geoscoping procedure for the certificate-based public key distribution approach according to exemplary embodiments of the present invention,
Figure 8 shows a signaling diagram of a fourth example of a geoscoping procedure for the certificate-based public key distribution approach according to exemplary embodiments of the present invention,
Figure 9 shows a schematic diagram illustrating an operational concept of the certificate-based public key distribution approach,
Figure 10 shows a schematic diagram illustrating an exemplary scenario of message verification with the certificate-based public key distribution approach when geoscoping according to exemplary embodiments of the present invention is not applied,
Figure 11 shows a schematic diagram illustrating an exemplary scenario of message verification with the certificate-based public key distribution approach when geoscoping according to exemplary embodiments of the present invention is applied,
Figure 12 shows a schematic diagram illustrating an exemplary architecture underlying a NAS/GBA-based public key distribution approach, for which exemplary embodiments of the present invention are applicable,
Figure 13 shows a signaling diagram of an example of a geoscoping procedure for the NAS/GBA-based public key distribution approach according to exemplary embodiments of the present invention, and
Figure 14 shows a schematic diagram illustrating an exemplary structure of apparatuses according to exemplary embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. In particular, for explaining applicability of thus described exemplary embodiments in an illustrative manner, a 3GPP system is used as a non-limiting example of a cellular communication system. As such, the description of exemplary embodiments given herein specifically refers to terminology which is directly related thereto. Such terminology is only used in the context of the presented non-limiting examples, and does naturally not limit the invention in any way. Rather, any other network configuration or system deployment, etc. may also be utilized as long as compliant with the features described herein.

In particular, the present invention and its embodiments may be applicable in any cellular communication system and/or system deployment in which a public warning system (PWS) of any kind is operable, such as e.g. the Earthquake and Tsunami Warning Service (ETWS), the Commercial Mobile Alert System (CMAS), also known as Wireless Emergency Alerts (WEA) and Personal Localized Alerting Network (PLAN), the Korean Public Alert System (KPAS), and the European Public Warning System (EU-ALERT), or any alternative and/or future development thereof.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) geoscoping for enhancing security in public warning systems.

As used herein, the term 'geoscoping' generally relates to a restriction of a scope of applicability of public keys. Such restriction in the scope of applicability could for example relate to a geographical area and/or a regulatory domain. In this regard, it is to be understood that the use of the term 'geoscoping' is not limited to scopes that are defined (solely) by geographical information/data/parameters. Rather, the use of the term 'geoscoping' equally encompasses scopes that are defined by other types of information/data/parameters, e.g. scopes defined by membership in a group or organization or by the domain where a given jurisdiction applies, or any other suitable means for defining the scope of applicability of public keys. Similarly, when the term 'region' is used herein, this term may also be understood to relate to any conceivable geographical area and/or a regulatory domain, including e.g. a group or organization or domain (e.g. of jurisdiction), or the like.

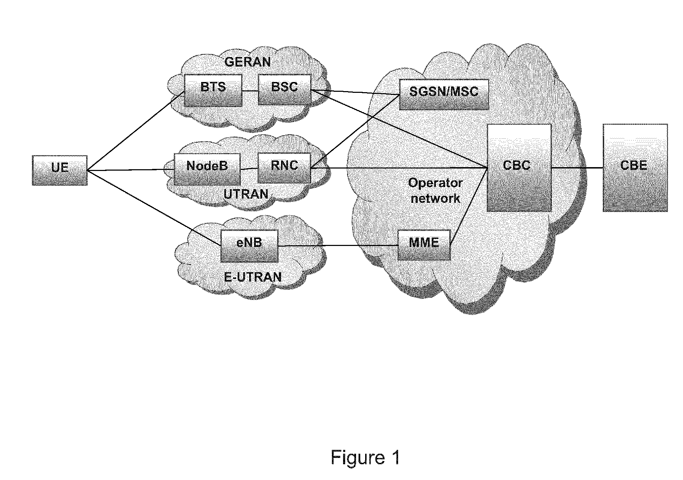

Figure 1 shows a schematic diagram illustrating an exemplary architecture of a public warning system, for which exemplary embodiments of the present invention are applicable. It is noted that this architectural diagram is taken from the Technical Specifications 3GPP TS 22.041 and TS 33.869.

As shown in Figure 1, a PWS deployment may be realized in various cellular communication systems and/or with various access network types. As mentioned above, a CBC represents a connection point of the CBE in the operator (core) network or PLMN and is connected with one or more access networks for broadcasting warning messages originated from the CBE to mobile users exemplarily denoted by a user equipment UE in Figure 1. For example, a corresponding cell broadcast may be accomplished via a GERAN access network (especially BSC and BTS elements thereof) and/or a UTRAN access network (especially RNC and NodeB elements thereof) and/or an E-UTRAN access network (especially eNB elements thereof) and/or any other conceivable access network operable with the operator (core) network or PLMN. In the illustrated example architecture, the warning messages may be distributed by way of cell broadcast with the help of an RNC element (of an UMTS system) in the case of a UTRAN access network and/or a BSC element (of a GSM/GPRS system) in the case of a GERAN access network and/or via a MME element (e.g. of a LTE/LTE-A system) in the case of an E-UTRAN access network, for example.

The PWS deployment of Figure 1 may be based on any conceivable PWS system, including e.g. the Earthquake and Tsunami Warning Service (ETWS), the Commercial Mobile Alert System (CMAS), also known as Wireless Emergency Alerts (WEA) and Personal Localized Alerting Network (PLAN), the Korean Public Alert System (KPAS), and the European Public Warning System (EU-ALERT).

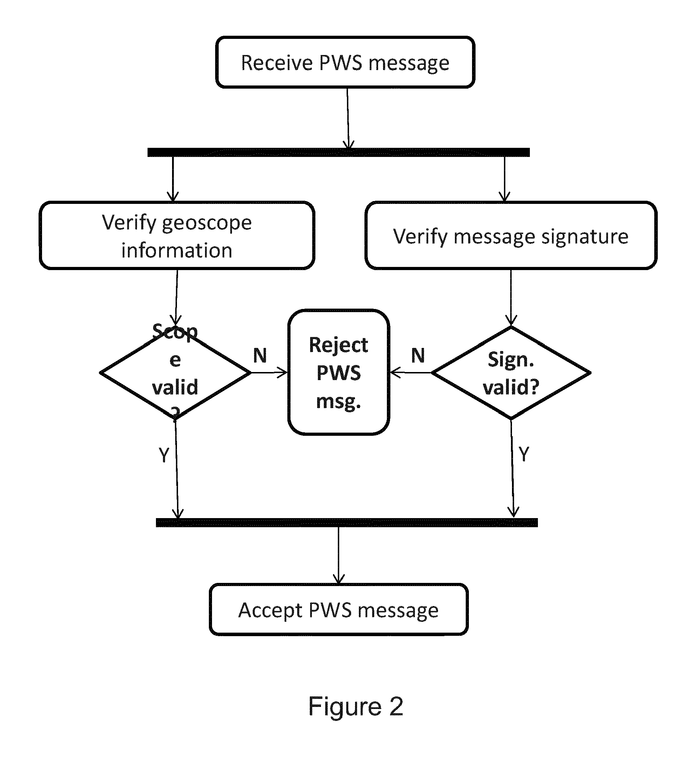

Figure 2 shows a unified modeling language activity diagram of a first example of a method according to exemplary embodiments of the present invention. Such method is operable at any user terminal or a dedicated part thereof, e.g. at the UE illustrated in Figure 1.

As shown in Figure 2, in a method according to exemplary embodiments of the present invention, there is received a PWS message, i.e. a warning message of the public warning system, which is signed by the originating CBE. With respect to the received PWS message, two (virtually independent) verifications are applied. On the one hand, geoscope information is verified, i.e. it is verified whether or not the geoscope relating to the received PWS message is valid. That is, it is determined whether or not a current location of the UE is within a (geographical/regulatory) scope defined by the geoscope information relating to the received PWS message. The geoscope information relating to the received PWS message is associated with a public key dedicated for verifying signed PWS messages of the public warning system, wherein the geoscope information defines a (geographical/regulatory) scope of validity of information verifiable by said public key. On the other hand, the message signature is verified, i.e. it is verified whether or not the signature of the received PWS message is valid. That is, it is verified whether the message signature is made by a signing key of a CBE, for which a corresponding public key is available at the UE (wherein this public key is associated with the geoscope information relating to the received PWS message). In case both verifications are affirmative, i.e. both the geoscope information relating to the received PWS message and the signature of the received PWS message are verified to be valid, the PWS message is accepted, and the UE may operate accordingly, e.g. by displaying the message to the user, issuing a warning corresponding to the contents of the PWS message, or the like. In case at least one of the verifications is negative, i.e. the geoscope information relating to the received PWS message and/or the signature of the received PWS message are verified to be invalid, the PWS message is rejected.

In view of Figure 2, it is noted that the two verifications can also be performed in a (at least partly) sequential manner, i.e. the geoscoping verification and the message signature verification can be sequentially performed (i.e. one after the other or in a partially overlapping manner) in an arbitrary order, instead of being processed in a parallel manner as exemplarily illustrated in Figure 2.

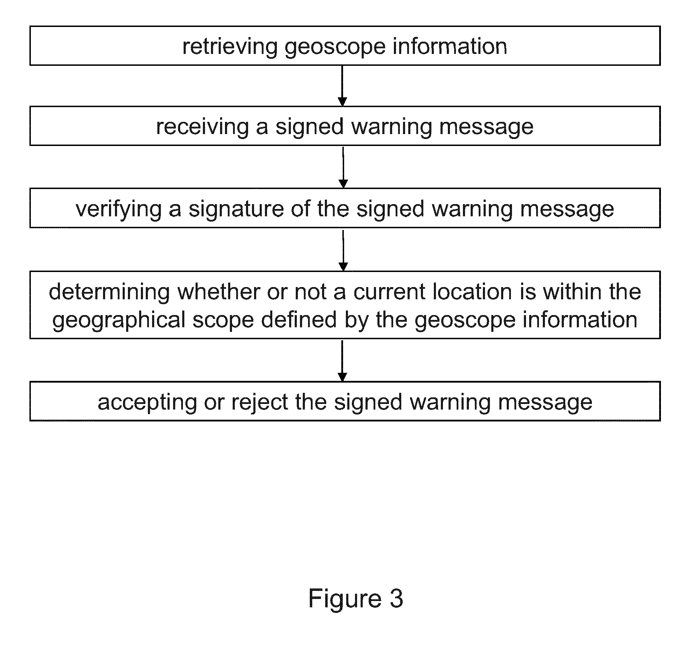

Figure 3 shows a flowchart of a second example of a method according to exemplary embodiments of the present invention. Such method is operable at any user terminal or a dedicated part thereof, e.g. at the UE illustrated in Figure 1.

As shown in Figure 3, a method according to exemplary embodiments of the present invention comprises retrieving geoscope information being associated with a public key dedicated for verifying signed warning messages of a public warning system, wherein the geoscope information defines a (geographical/regulatory) scope of validity of information verifiable by said public key, receiving a signed warning message of the public warning system, verifying a signature of the received signed warning message using said public key (basically corresponding to the verification of the message signature according to the method of Figure 2), determining whether or not a current location is within the (geographical/regulatory) scope defined by the retrieved geoscope information (basically corresponding to the verification of the geoscope information according to the method of Figure 2), and accepting the received signed warning message, if both the signature of the signed warning message is successfully verified using said public key and the current location is determined to be within the (geographical/regulatory) scope defined by the retrieved geoscope information, or otherwise rejecting the received signed warning message.

In view of Figure 3, it is noted that the illustrated order of the verifying and determining operations/processes is for illustrative purposed by way of example only. Instead, the verifying and determining operations/processes can also be performed in a parallel manner or in a (at least partly) sequential in an arbitrary order (i.e. the determining operation/process may be performed or at least started before or the verifying operation/process).

According to exemplary embodiments of the present invention, geoscoping of public keys in a public warning system is realized/enabled. That is, the scope of a public key dedicated for verifying signed warning messages of a public warning system is limited, wherein such public key may for example be a CBE public key, a CA public key and/or a CBE certificate. The thus limited scope corresponds to the regulatory domain or geographical area, e.g. one country, a set of countries (such as the European Union), or one or more regions within a country (such as a state like Colorado in the US) or within a set of countries (such as central European countries within the European Union), or the like, where this public key is valid/authorized to be used for verifying sender authentication and integrity of PWS warning messages.

According to exemplary embodiments of the preset invention, the limited scope may be (securely) associated to an entity of the public warning system, such as a CA and/or a CBE. Such entity-related association is exemplarily assumed in the following description of embodiments. If CA or CBE geoscope would not be associated, i.e. no such entity-related association is adopted, the UE could look up, e.g. from an independent database, the geoscope information for all CA or CBE public keys (which are available in its key store) e.g. by using the identity of the CA or CBE sent (in a PWS warning message). Accordingly, geoscope information to be used at the UE may be retrieved by/in certain messages and/or by a database look-up or the like. Namely, retrieving is meant to not only encompass a real-time acquisition e.g. by message receipt, database look-up or the like, but also a preceding acquisition/setting e.g. by way of pre-provisioning/setting by configuration or the like.

According to exemplary embodiments of the present invention, the term 'geoscope' used herein is meant to refer to geoscope information, especially geoscope information being associated with a public key dedicated for verifying signed warning messages of a public warning system, wherein the geoscope information defines a scope of validity of information verifiable by said public key. This scope can be geographical, but could be also scoped in a different way, as long as it is usable to limit CA or CBE or public keys of any one of these to a certain regulatory domain or geographical areas. It can, to name only some non-limiting examples, be expressed e.g. as a country name that is either human-readable, or is coded such that it can be transformed into human-readable text, or else the scope can be expressed e.g. in GPS coordinates.

Geoscoping according to exemplary embodiments of the present invention could be implicit e.g. in the CBE name (that may e.g. include a country code), part of a certificate (e.g. in the policy field or an extension field), geographical data such as a polygon or the like, location and radius, or the like.

Hereinafter, the following notation is used: gs_X denotes a geoscope or geoscope information, pk_CA denotes a (root) CA's public key, gs_CA denotes a (root) CA's geoscope or geoscope information (i.e. a geoscope or geoscope information of pk_CA), pk_CBE denotes a CBE's public key, gs_CBE denotes a CBE's geoscope or geoscope information (i.e. a geoscope or geoscope information of pk_CBE), and cert_CA(*x*) denotes a certificate on/for x, which is issued by a (root) CA.

In the following, exemplary embodiments of the present invention are exemplarily described with reference to the certificate-based public key distribution approach. In this regard, reference is made to 'geographical scope' for illustrative purposes by way of example only, yet without restricting the applicability of the corresponding technical teaching. Rather, the above definition of the applicability of the terms 'geoscoping' and 'region' equally apply here as well.

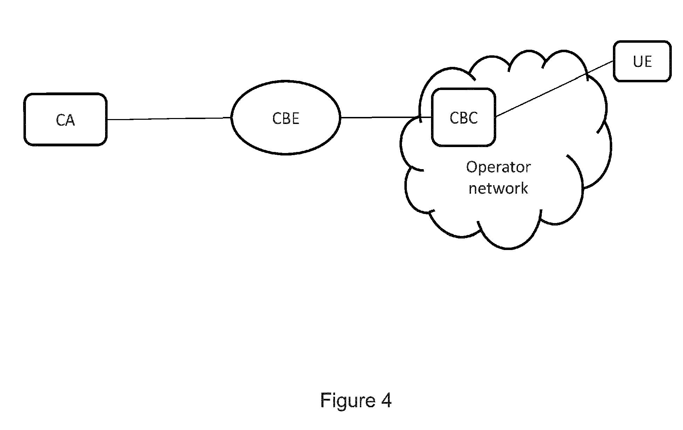

Figure 4 shows a schematic diagram illustrating an exemplary architecture underlying a certificate-based public key distribution approach, for which exemplary embodiments of the present invention are applicable.

As shown in Figure 4, the basic underlying architecture comprises a CBE which is connected to a CA (e.g. a root CA) in charge of its geographical coverage area, in addition to a CBC in an operator network, via which cell broadcast of PWS warning messages to a UE is accomplished.

Generally, as outlined above, the certificate-based public key distribution approach comprises that a certificate on a public key (generally speaking, information that allows determining the public key) of a cell broadcast entity of the public warning system is obtained at the UE, which is signed by a public key of a certificate authority of the public warning system, namely cert_CA(pk_CBE). The certificate may comprise an implicit certificate included in the received signed warning message or an explicit certificate included in a received broadcast message other than the received signed warning message.

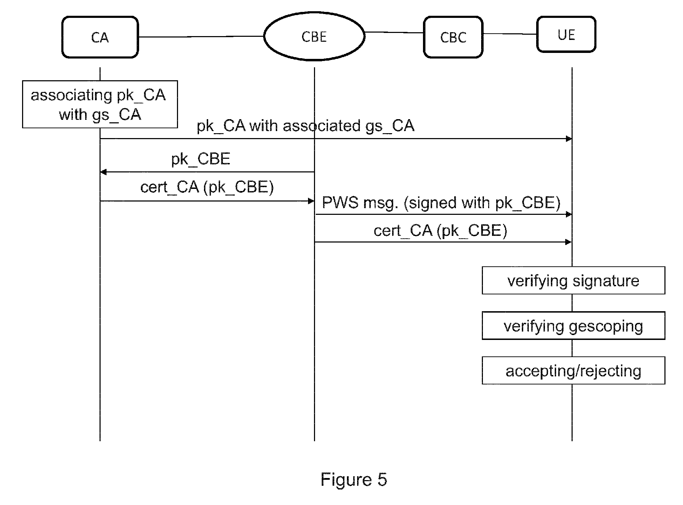

Figure 5 shows a signaling diagram of a first example of a geoscoping procedure for the certificate-based public key distribution approach according to exemplary embodiments of the present invention.

In this option, the scope of a public key of a (root) CA is limited by way of geoscoping. To this end, cert_CA(pk_CBE), pk_CA and gs_CA are provided to the UE, wherein pk_CA and gs_CA are associated e.g. by any secure configuration means. The gs_CA could also be part of a self-signed certificate by the CA on the pk_CA. Specifically, the relevant geoscope information relates to the CA and is associated with pk_CA, the relevant geoscope information is retrieved together with pk_CA by receiving a message or inquiring a database, prior to receiving a PWS warning message, and the signature of the PWS warning message is indirectly verified using pk_CA, with which cert_CA(pk_CBE) is signed.

In a first operation shown in Figure 5, geographical scope is associated with the public key of the (root) CA, i.e. pk_CA. Namely, pk_CA and gs_CA are associated at/for the CA.

In this regard, it is to be noted that CAs may be set up in various countries or regulatory domains (e.g. the European Union) to support PWS security. These CAs serve as root CAs and issue certificates to subordinate PWS entities, namely CBEs. The regulators associate information with the public keys of these root CAs that limits the geoscope of validity of any PWS-related information that can be verified with the help of such a public key. The root CA public key may be further assumed to be associated with a globally unique identifier of the root CA.

In a second operation shown in Figure 5, the public key of the (root) CA, i.e. pk_CA, together with its associated geoscope, i.e. gs_CA, is provided to the UE e.g. any conceivable configuration/setting means, whereby the CBE and the CBC are not involved.

In this regard, it is to be noted that such provisioning may be accomplished in an arbitrary manner, such as a manner in which a root CA public key can be provisioned in a UE, e.g. at manufacturing time, or via SMS, or via OMA DM, or via the USIM or OTA management of the USIM. In the same manner, the globally unique identifier of the root CA may also be provided to the UE (although not illustrated in Figure 5).

In a third operation shown in Figure 5, the signature of a received PWS warning message is verified with the public key of the CBE at the UE.

In this regard, it is assumed that the PWS warning message received by the UE over the CBS broadcast service is digitally signed by the CBE, i.e. with pk_CBE, and that a certificate on pk_CBE, i.e. cert_CA(pk_CBE), is also received by the UE over the CBS broadcast service, either as implicit certificate or, as exemplarily illustrated in Figure 5, as explicit certificate. The certificate cert_CA(pk_CBE) is issued by the CA by signing pk_CBE provided by the CBE with its signing key.

The verification of the message signature requires the UE to have pk_CBE available. In one implementation example, when an implicit certificate is used, pk_CBE can be computed by the UE from the implicit certificate received by the UE as part of the warning message, provided that the UE has available pk_CA of the root CA that signed the implicit certificate. The implicit certificate may be assumed to contain the globally unique identifier of this root CA. In case the globally unique identifier is not contained, the UE could try all the root CA public keys it has available or may request the root CA public key from a database, e.g. if roaming. The message signature is successfully verified with at most one such public key.

In a fourth operation shown in Figure 5, the geoscoping is verified at the UE. Namely, the UE compares the previously retrieved CA geoscope gs_CA associated with pk_CA and compares it with its own location information to determine whether or not its current location is within the geographical scope defined by the retrieved CA geoscope gs_CA.

In this regard, the UE retrieves the geoscope associated with the public key used for message signature verification and checks it against its own location information that is locally available to the UE. Preferably, the locally available own location information is independent of any network-provided information (as such network-provided information could have been sent by a fraudulent network with the help of a false base station, or the like). The nature of the check depends on the type of the geoscope information used.

As a first example of geoscoping verification, the check can be performed by the user. If e.g. the geoscope is a human-readable country name or a code transformable into human-readable text, the UE can display - or announce - the country name to the user, and the user can decide to consider the warning message or ignore it, depending on his knowledge about the country he is currently in. That is, the geoscope information can define a regulatory domain or a geographical area in a human-readable manner or by a code transformable into human-readable text, and the determining can be performed on the basis of a user's knowledge of the current location and the human-readable geoscope information.

As a second example of geoscoping verification, the geoscope can be related to GPS coordinates, and the UE is GPS-enabled. Then, the UE can check whether the GPS coordinates of its current position are compatible with the geoscope. That is, the geoscope information can define a regulatory domain or a geographical area by positioning system coordinates, and the determining can be performed on the basis of positioning system coordinates of the current location and the positioning system coordinates of the geoscope information.

As a third example of geoscoping verification, under the assumption of no fraudulent network, the network can offer a (secured) service, where a UE could look up its own location information, e.g. in a database. An independent (secured) application service provider could exist as well, from which the UE could get to know its own location information. That is, the geoscope information can define a regulatory domain or a geographical area in an electronically processable manner, and the determining can be performed on the basis of the current location provided by a network service and the electronically processable geoscope information.

As a fourth example of geoscoping verification, the UE can have an online application or a pre-stored list of CA certificates including geoscopes and can compare the root CA's geoscope received with the geoscope stored. If they do not match, then the UE can also consider the received warning message as forged. The assumption here is that the UE has been pre-provisioned with a list of valid root CAs when none of them was compromised yet. That is, in case of the geoscope information relating to a certificate authority, the determining can be performed on the basis of the retrieved geoscope information and a list of at least one certificate of certificate authorities including associated certificate authority thereof.

Referring to the third and fourth operations shown in Figure 5, as described above, it is to be noted that these could also be performed in a different order or (partially) simultaneously. In a sequential processing, the latter operation could be skipped and the received PWS warning message could be rejected without performing the latter operation, if the former operation is not successful. That is, the UE only verifies the geoscoping relating to the PWS warning message when its signature has been successfully verified, or the UE only verifies the signature of the PWS warning message when its relating geoscoping has been successfully verified.

In a fifth operation shown in Figure 5, the received PWS warning message is accepted or rejected depending on the result of the preceding verification, i.e. the results of the signature and/or geoscoping verifications. Upon verifying the CA geoscope and/or verifying the message signature, the UE acts depending on the corresponding verification result.

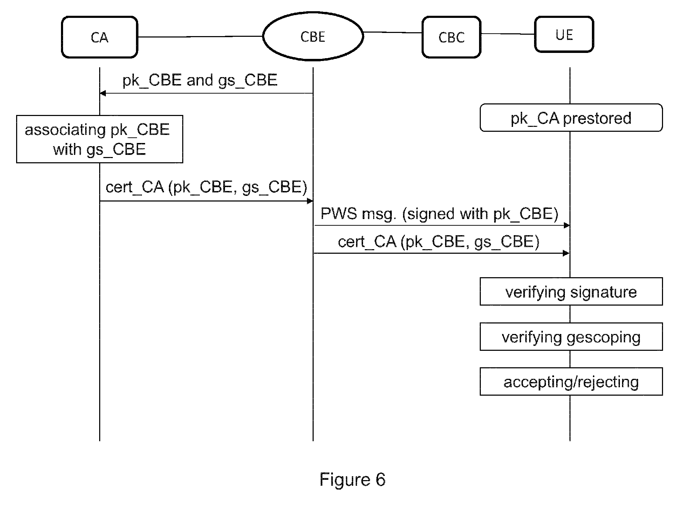

Figure 6 shows a signaling diagram of a second example of a geoscoping procedure for the certificate-based public key distribution approach according to exemplary embodiments of the present invention.

In this option, the scope of a CBE certificate, especially the scope of the CBE within the CBE certificate, is limited by way of geoscoping. To this end, cert_CA(pk_CBE, gs_CBE) is provided to the UE, wherein pk_CBE and gs_CBE are associated e.g. by any secure configuration means. Specifically, the relevant geoscope information relates to the CBE and is associated with pk_CBE, the relevant geoscope information is retrieved together with the pk_CBE within cert_CA(pk_CBE, gs_CBE), and the signature of the PWS warning message is directly verified using the pk_CBE, on which cert_CA(pk_CBE, gs_CBE) is issued.

It is assumed for this procedure that a (secure) provisioning of a root CA public key, i.e. pk_CA, and - possibly - its associated geoscope has already happened, and thus pk_CA is available at the UE.

In a first operation shown in Figure 6, geographical scope is associated with the CBE certificate, especially the scope of the CBE within the CBE certificate.

In this regard, as the CBE is responsible for a certain area, CBE geographical scope, i.e. gs_CBE, is associated with the public key of the CBE, i.e. pk_CBE, and signed by the CA. Although in Figure 6 the association is exemplarily illustrated to be accomplished at the CA upon receiving pk_CBE and gs_CBE in an unassociated manner, it could equally be accomplished at the CBE and then pk_CBE and gs_CBE can be provided to the CA in an associated manner. Anyway, the CA signs the associated pk_CBE and gs_CBE with its signing key to issue cert_CA(pk_CBE, gs_CBE) to the CBE. The thus issued certificate cert_CA(pk_CBE, gs_CBE) could be a new type of certificate, in which e.g. an X.509 extension could be used to include the geoscope, assuming that also the extensions are signed.

In a second operation shown in Figure 6, the CBE certificate, and thus the public key of the CBE, i.e. pk_CBE, together with its associated geoscope, i.e. gs_CBE, is provided to the UE via the CBE (and the CBC).

In this regard, it is to be noted that such provisioning may be accomplished in an arbitrary manner, such as a manner in which a root CA public key can be provisioned in a UE, e.g. at manufacturing time, or via SMS, or via OMA DM, or via the USIM or OTA management of the USIM. The CBE certificate thus provided also includes the aforementioned extension, if applicable. As mentioned above, the CBE certificate may be provided either as implicit certificate or, as exemplarily illustrated in Figure 6, as explicit certificate.

In a third operation shown in Figure 6, the signature of a received PWS warning message is verified with the public key of the CBE at the UE. To this end, the CBE certificate is to be verified so as to obtain pk_CBE in a reliable manner.

In this regard, the UE verifies cert_CA(pk_CBE, gs_CBE) and, if determined to be trustworthy, the UE stores pk_CBE. Upon receipt of a PWS warning message, its signature is verified using pk_CBE.

In a fourth operation shown in Figure 6, the geoscoping is verified at the UE. Namely, the UE compares the previously retrieved CBE geoscope gs_CBE associated with pk_CBE and compares it with its own location information to determine whether or not its current location is within the geographical scope defined by the retrieved CBE geoscope gs_CBE.

In this regard, the same or similar examples of geoscoping verification are applicable, which are described in connection with Figure 5 above.

Referring to the third and fourth operations shown in Figure 6, as described above, it is to be noted that these could also be performed in a different order or (partially) simultaneously. For details, reference is made to the corresponding description in connection with Figure 5 above.

In a fifth operation shown in Figure 6, the received PWS warning message is accepted or rejected depending on the result of the preceding verification, i.e. the results of the signature and/or geoscoping verifications. Upon verifying the CBE geoscope and/or verifying the message signature, the UE acts depending on the corresponding verification result.

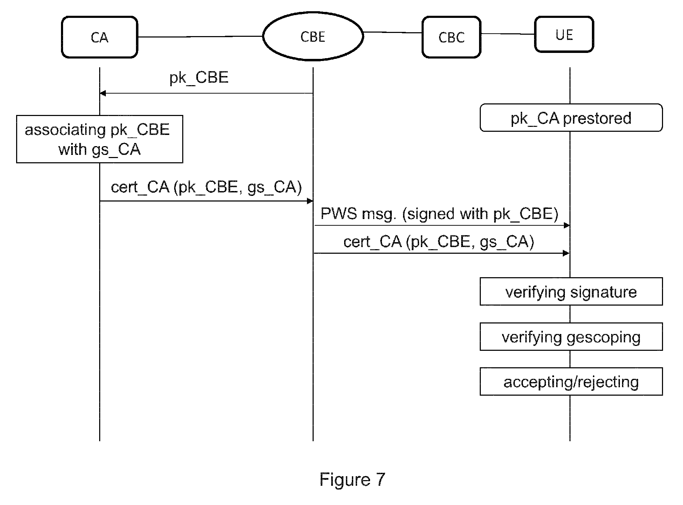

Figure 7 shows a signaling diagram of a third example of a geoscoping procedure for the certificate-based public key distribution approach according to exemplary embodiments of the present invention.

In this option, the scope of a CBE certificate, especially the scope of the CA within the CBE certificate, is limited by way of geoscoping. To this end, cert_CA(pk_CBE, gs_CA) is provided to the UE, wherein pk_CBE and gs_CA are associated e.g. by any secure configuration means. Specifically, the relevant geoscope information relates to the CA and is associated with pk_CBE, the relevant geoscope information is retrieved together with pk_CBE within cert_CA(pk_CBE, gs_CA), and the signature of the PWS warning message is directly verified using pk_CBE, on which cert_CA(pk_CBE, gs_CA) is issued.

As certain operations of the present procedure are comparable to certain operations of the procedures of Figures 5 and 6, the following focuses on differences thereto and specifics of the present procedure. For further details regarding the individual operations and/or their sequences, reference is made to the above description in connection with Figures 5 and 6.

In a first operation shown in Figure 7, geographical scope is associated with the CBE certificate, especially the scope of the CA within the CBE certificate.

In this regard, it is to be noted that the CA geoscope information gs_CA is stored together with the root CA public key pk_CA at the CA. The CBE sends its public key pk_CBE to the CA, and the CA attaches gs_CA to pk_CBE, i.e. associates gs_CA and pk_CBE, before generating a certificate on pk_CBE, thereby issuing cert_CA(pk_CBE, gs_CA) with its signing key.

In a second operation shown in Figure 7, the CBE certificate, and thus the public key of the CBE, i.e. pk_CBE, together with its associated geoscope, i.e. gs_CA, is provided to the UE via the CBE (and the CBC).

In a third operation shown in Figure 7, the signature of a received PWS warning message is verified with the public key of the CBE at the UE. To this end, the CBE certificate is to be verified so as to obtain pk_CBE in a reliable manner.

In a fourth operation shown in Figure 7, the geoscoping is verified at the UE. Namely, the UE compares the previously retrieved CBE geoscope gs_CA associated with pk_CBE and compares it with its own location information to determine whether or not its current location is within the geographical scope defined by the retrieved CBE geoscope gs_CA.

In a fifth operation shown in Figure 7, the received PWS warning message is accepted or rejected depending on the result of the preceding verification, i.e. the results of the signature and/or geoscoping verifications. Upon verifying the CBE geoscope and/or verifying the message signature, the UE acts depending on the corresponding verification result.

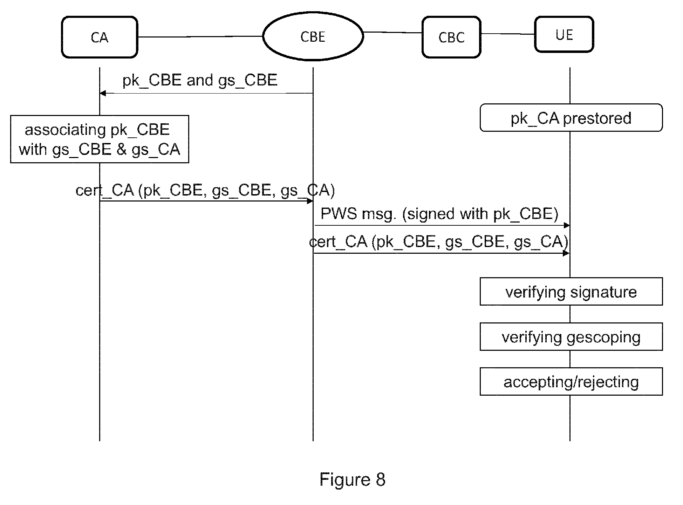

Figure 8 shows a signaling diagram of a fourth example of a geoscoping procedure for the certificate-based public key distribution approach according to exemplary embodiments of the present invention.

In this option, the scope of a CBE certificate, especially the scope of the CBE and the CA within the CBE certificate, is limited by way of geoscoping. To this end, cert_CA(pk_CBE, gs_CBE, gs_CA) is provided to the UE, wherein pk_CBE and gs_CBE and gs_CA are associated e.g. by any secure configuration means. Specifically, the relevant geoscope information relates to the CA and the CBE and is associated with pk_CBE, the relevant geoscope information is retrieved together with the pk_CBE within cert_CA(pk_CBE, gs_CBE, gs_CA), and the signature of the received signed warning message is directly verified using pk_CBE, on which cert_CA(pk_CBE, gs_CBE, gs_CA) is issued.

As certain operations of the present procedure are comparable to certain operations of the procedures of Figures 5 to 7, the following focuses on differences thereto and specifics of the present procedure. For further details regarding the individual operations and/or their sequences, reference is made to the above description in connection with Figures 5 to 7.

Specifically, it is to be noted that the present option - in principle - combines the option according to Figure 6 and the option according to Figure 7. While the scope of the CBE within the CBE certificate is limited in the option according to Figure 6 and the scope of the CA within the CBE certificate is limited in the option according to Figure 7, the scope of the CBE and the CA within the CBE certificate is limited in the option according to Figure 8.

In a first operation shown in Figure 8, geographical scope is associated with the CBE certificate, especially the scope of the CBE and the CA within the CBE certificate.

In this regard, it is to be noted that the CA geoscope information gs_CA is stored together with the root CA public key pk_CA at the CA, and the CBE geoscope information gs_CBE is stored together with the CBE public key pk_CBE at the CBE. The CBE sends pk_CBE and gs_CBE to the CA, and the CA attaches gs_CBE and gs_CA to pk_CBE, i.e. associates gs_CBE and gs_CA and pk_CBE, before generating a certificate on pk_CBE, thereby issuing cert_CA(pk_CBE, gs_CBE, gs_CA) with its signing key.

In a second operation shown in Figure 8, the CBE certificate, and thus the public key of the CBE, i.e. pk_CBE, together with its associated geoscopes, i.e. gs_CBE and gs_CA, is provided to the UE via the CBE (and the CBC).

In a third operation shown in Figure 8, the signature of a received PWS warning message is verified with the public key of the CBE at the UE. To this end, the CBE certificate is to be verified so as to obtain pk_CBE in a reliable manner.

In a fourth operation shown in Figure 8, the geoscoping is verified at the UE. Namely, the UE compares the previously retrieved geoscopes gs_CBE and gs_CA associated with pk_CBE and compare them with its own location information to determine whether or not its current location is within the geographical scope defined by the retrieved geoscopes gs_CBe and gs_CA (e.g. an intersection thereof).

In a fifth operation shown in Figure 8, the received PWS warning message is accepted or rejected depending on the result of the preceding verification, i.e. the results of the signature and/or geoscoping verifications. Upon verifying the CA/CBE geoscope and/or verifying the message signature, the UE acts depending on the corresponding verification result.

In summary, the option according to Figure 5 adopts geoscoping (i.e. geoscoping CA) with respect to the scope of a public key of CA, while any one of the options according to Figures 6 to 8 adopts geoscoping (i.e. geoscoping CBE and/or CA) with respect to the scope of a certificate on a public key of CBE.

In contrast to geoscoping with respect to the scope of a public key of CA, geoscoping with respect to the scope of a certificate on a public key of CBE, i.e. a CBE certificate, does not require that the geoscope is pre-provisioned in the UE, if the CBE certificate is not pre-provisioned in the UE.

As compared with geoscoping with respect to the scope of a public key of a certificate authority, geoscoping with respect to a CBE certificate could provide for a finer granularity. For example, a CBE may be scoped to act only in Munich. However, if so, it may become more difficult for the issuing authority to clearly describe the geoscope, and it may become more difficult for the UE or the user to clearly determine whether the current location is within the geoscope or not. Furthermore, such finer granularity may not even be necessarily required, as one CA can be expected to be limited to a region governed by one regulation, of which the regulator can take responsibility for compromises.

Geoscoping with respect to a CBE certificate is capable of mitigating the threat that impacts of a compromise of a CBE in one region spread around the world, but may be not capable of achieving such effect in case of a CA compromise. This is because an attacker could, with the help of the compromised CA, issue a forged CBE certificate with a false scope. But, as compromising a CA is assumed to be more difficult than compromising a CBE, geoscoping with respect to a CBE certificate may still provide for sufficient security in public warning systems and, thus, for an acceptable PWS security solution.

Geoscoping with respect to a CBE certificate, which limits the scope of a CA or the scope of both a CA and a CBE, is most effective when the CA and the CBE exhibit the same granularity, i.e. operate on/for the same region. Otherwise, in case of different granularities of the scope of CA and CBE may e.g. depending on national PWS settings (e.g. many CBEs or just a few under one CA), an intersection of their respective geoscopes could be applicable as the relevant geoscope.

In the following, certain effects of geoscoping according to exemplary embodiments of the present invention are exemplarily described.

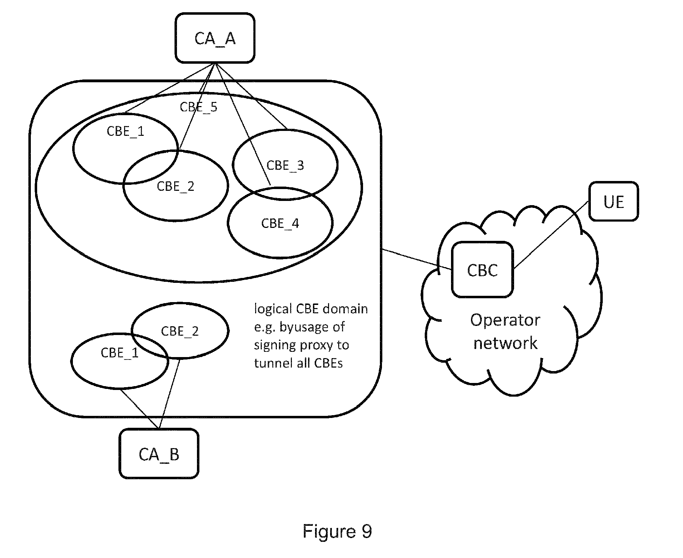

Figure 9 shows a schematic diagram illustrating an operational concept of the certificate-based public key distribution approach. In this figure, circles/ ellipsoids are meant to represent geoscopes of respective CBEs.

As shown in Figure 9, there is exemplarily assumed a certificate-based public key distribution approach with one CA being responsible for all CBEs in one specific region, e.g. CA_A being responsible for a first set of CBEs comprising CBE_1 to CBE_5 and CA_B being responsible for a geographically separate set of CBEs comprising CBE_6 and CBE_7. In a logical CBE domain, a scenario is assumed, in which e.g. CBE_1 to CBE_5 are responsible for delivery of different disaster messages (e.g. earthquake danger in region 1 of CBE_1 and region 4 of CBE_4, tsunami danger in region 2 of CBE_2 and region 3 of CBE_3, and general governmental disaster information for all regions, here region 5 of CBE_5)

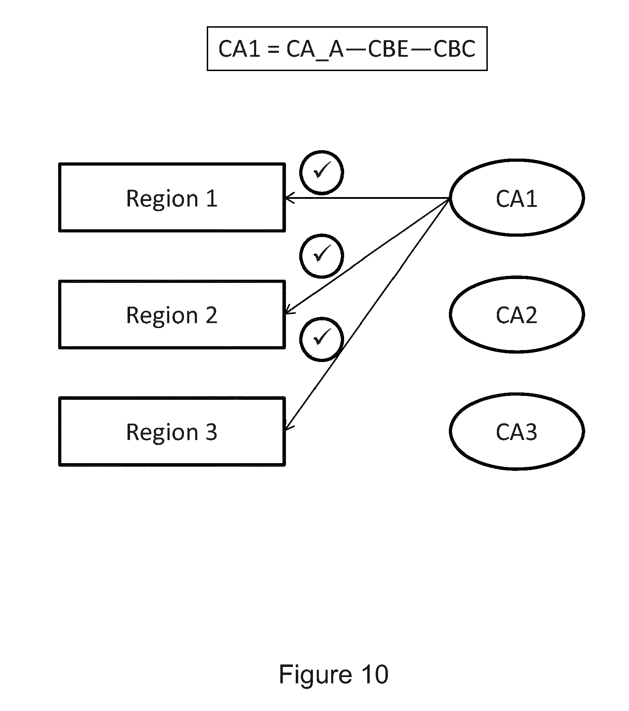

Figure 10 shows a schematic diagram illustrating an exemplary scenario of message verification with the certificate-based public key distribution approach when geoscoping according to exemplary embodiments of the present invention is not applied.

As shown in Figure 10, any valid message can be verified anywhere. For example, CA1 exemplifying CA_A in Figure 9 is capable of signing PWS warning messages for regions 1, 2 and 3.

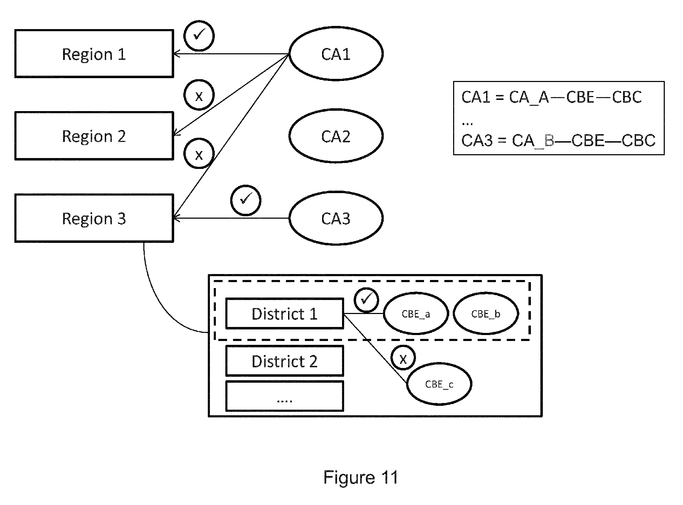

Figure 11 shows a schematic diagram illustrating an exemplary scenario of message verification with the certificate-based public key distribution approach when geoscoping according to exemplary embodiments of the present invention is applied. Specifically, geoscoping on the basis of the option according to Figure 8 is exemplarily assumed.

As shown in Figure 11, any valid message is scoped to a region/district and can be verified only within this region/district. For example, CA1 exemplifying CA_A in Figure 9 is subject to geoscoping such that it is capable of signing PWS warning messages for region 1 only, and CA3 exemplifying CA_B in Figure 9 is subject to geoscoping such that it is capable of signing PWS warning messages for region 3 only. Further, within region 3, geoscoping is so that only PWS warning messages originating from CBE_a and CBE_b are valid in district 1, but not PWS warning messages originating from CBE_c.

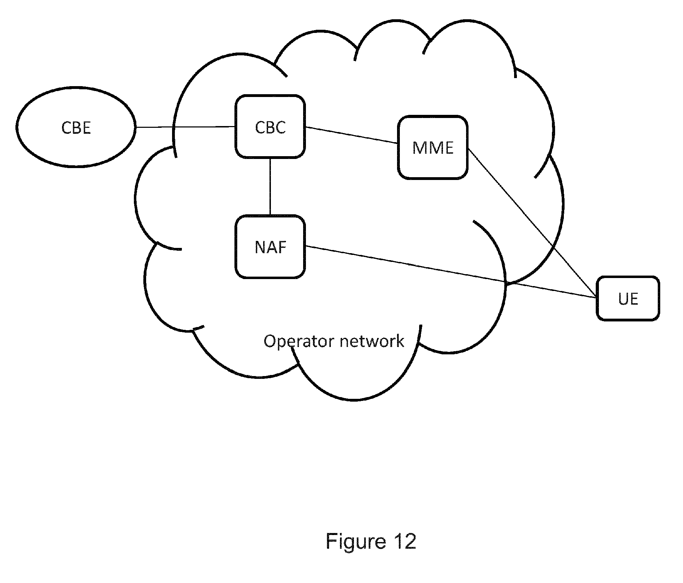

In the following, exemplary embodiments of the present invention are exemplarily described with reference to the NAS/GBA-based public key distribution approach. Figure 12 shows a schematic diagram illustrating an exemplary architecture underlying a NAS/GBA-based public key distribution approach, for which exemplary embodiments of the present invention are applicable.

As shown in Figure 12, the basic underlying architecture comprises a CBE which is connected to a CBC in an operator network, via which cell broadcast of PWS warning messages to a UE is accomplished. In the exemplary architecture of Figure 12, both NAS- and GBA-based public key distribution approaches are illustrated in parallel, while only one of them may be adopted as well. In the NAS-based public key distribution approach, the public key distribution is exemplarily accomplished via a MME (of a LTE/LTE-A system), which could however also be a SGSN/MSC (of a UMTS system) or the like, over NAS signaling messages from the core network. In the GBA-based public key distribution approach, the public key distribution is exemplarily accomplished via a Network Application Function (NAF) exemplifying an application server where the security is provided by a Generic Bootstrapping Architecture (GBA).

Generally, it is to be noted that there are no CAs and no CBE certificates in the NAS/GBA-based public key distribution approach. There are only CBE public keys that are provided to the UE over NAS signaling messages from the core network (NAS approach) or over various transport means (e.g. packet connection or SMS) from a dedicated application server (such as the NAF in Figure 12) where the security is provided by the Generic Bootstrapping Architecture (GBA-approach).

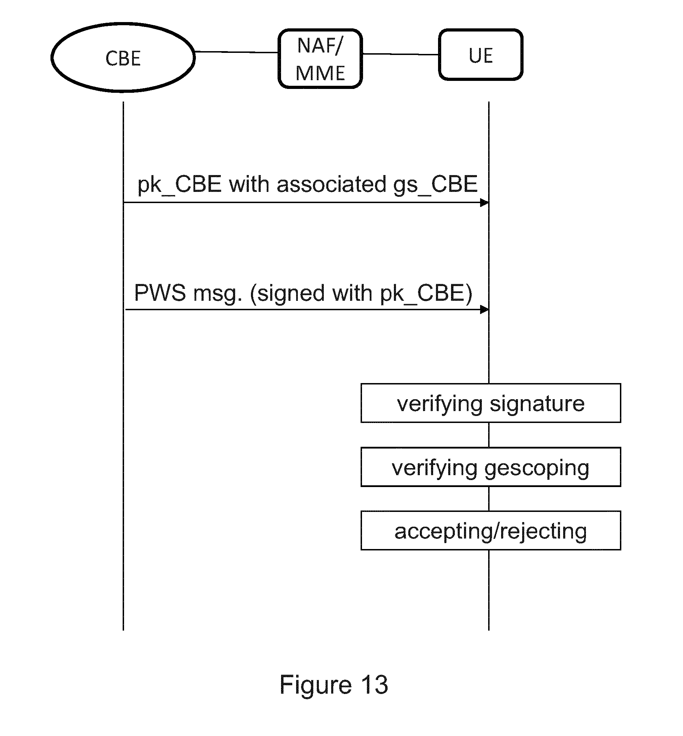

Figure 13 shows a signaling diagram of an example of a geoscoping procedure for the NAS/GBA-based public key distribution approach according to exemplary embodiments of the present invention.

In this regard, the scope of a public key of the CBE, i.e. pk_CBE, is limited by way of geoscoping, irrespective of whether the NAS-based public key distribution approach or the GBA-based public key distribution approach is adopted.

As shown in Figure 13, a CBE associates its pk_CBE with its corresponding geoscope gs_CBE and provides the same to the UE, which is accomplished over NAS signaling messages in the NAS-based public key distribution approach via e.g. an MME or from/via a GBA-protected application server (such as the NAF in Figure 12) in the GBA-based public key distribution approach. Upon receiving a signed PWS warning message from the CBE, the UE verifies its signature using pk_CBE and verifies the relating geoscope using gs_CBE in a similar manner as described above. Then, the received PWS warning message is accepted or rejected by the UE depending on the result of the preceding verification, i.e. the results of the signature and/or geoscoping verifications, in a similar manner as described above.

In view of the above, it is to be noted that all options and approaches described hereinbefore could be arbitrarily combined. That is, all of the mentioned public key distribution approaches could be combined within a single system, and all of the options mentioned for the certificate-based distribution approach could also be combined within a single system. For example, one of the certificate-based options could be adopted in a specific region for limiting the impact of a regional security breach to this specific region, while another one of the certificate-based options could be adopted in another region for limiting the impact of a regional security breach to this other region. In this regard, for adopting an appropriate approach and/or option in a certain region, various aspects may be considered. For example, it can be taken into consideration that in some (possibly larger) countries or sets of countries under multilateral agreement or the like thousands of CBEs may exist, while in other countries the number of CBEs may be very restricted, a CBE could be responsible for just one warning type or for several warning types covering one district (e.g. mapped to a small cell area of the network operator) or many different districts (e.g. mapped to the complete network of the network operator).

By virtue of exemplary embodiments of the present invention, as explained above, geoscoping in public warning systems is provided. Thereby, the security in public warning systems may be enhanced.

Specifically, exemplary embodiments of the present invention enable to limit the impact of a regional security breach in a public warning system to the region where it occurred, namely to prevent that the impacts of a regional security breach spread around the world. Thereby, the security of the distribution of the public key which is used to verify a signed warning message may be enhanced, including any one of the NAS-based approach, the GBA-based approach and the certificate-based approach.

Further, exemplary embodiments of the present invention enable to enhance the security in public warning systems, without requiring that a (national) regulator, government or other public safety authority has to establish confidence in CBEs outside its region, while enabling that, if a (national) regulator, government or other public safety authority cannot establish confidence in CBEs in some region (e.g. of another country), all UEs sold within the region of that (national) regulator, government or other public safety authority can use PWS security also in other regions.

Stated in other words, for the applicability of geoscoping according to exemplary embodiments of the present invention, there is not required any mutual trust among (national) regulators, governments or other public safety authorities with respect to PWS equipment such as CBEs. Accordingly, a global solution for PWS security may be achieved by virtue of exemplary embodiments of the present invention.

The above-described methods, procedures and functions may be implemented by respective functional elements, processors, or the like, as described below.

While in the foregoing exemplary embodiments of the present invention are described mainly with reference to methods, procedures and functions, corresponding exemplary embodiments of the present invention also cover respective apparatuses, network nodes and systems, including both software and/or hardware thereof.

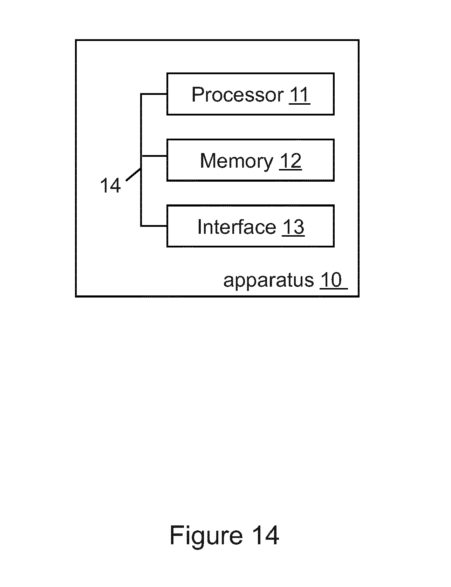

Respective exemplary embodiments of the present invention are described below referring to Figure 14, while for the sake of brevity reference is made to the detailed description of respective corresponding configurations/setups, schemes, methods and functionality, principles and operations according to Figures 1 to 13.

In Figure 14, the solid line blocks are basically configured to perform respective operations as described above. The entirety of solid line blocks are basically configured to perform the methods and operations as described above, respectively. With respect to Figure 14, it is to be noted that the individual blocks are meant to illustrate respective functional blocks implementing a respective function, process or procedure, respectively. Such functional blocks are implementation-independent, i.e. may be implemented by means of any kind of hardware or software, respectively. The lines interconnecting individual blocks are meant to illustrate an operational coupling therebetween, which may be a physical and/or logical coupling, which on the one hand is implementation-independent (e.g. wired or wireless) and on the other hand may also comprise an arbitrary number of intermediary functional entities not shown.

Further, in Figure 14, only those functional blocks are illustrated, which relate to any one of the above-described methods, procedures and functions. A skilled person will acknowledge the presence of any other conventional functional blocks required for an operation of respective structural arrangements, such as e.g. a power supply, a central processing unit, respective memories or the like. Among others, memories are provided for storing programs or program instructions for controlling the individual functional entities to operate as described herein.

Figure 14 shows a schematic diagram illustrating an exemplary structure of apparatuses according to exemplary embodiments of the present invention.

In view of the above, the thus illustrated apparatus 10 is suitable for use in practicing the exemplary embodiments of the present invention, as described herein.

The thus illustrated apparatus 10 may represent a (part of a) user equipment, terminal, or the like, such as UE illustrated throughout the drawings, according to exemplary embodiments of the present invention, and it may be configured to perform a procedure and/or exhibit a functionality as described (for UE) in any one of Figures 2, 3, 5 to 8, and 13.

The thus illustrated apparatus 10 may equally represent a (part of a) network entity, such as a CBE or CA, according to exemplary embodiments of the present invention, and it may be configured to perform a procedure and/or exhibit a functionality as described (for the CBE and/or the CA) in any one of Figures 5 to 11 and 13.

As indicated in Figure 14, according to exemplary embodiments of the present invention, the apparatus 10 may comprise at least one processor 11 and at least one memory 12 (and possibly also at least one interface 13), which may be connected by a bus 14 or the like, respectively.

The processor 11 and/or the interface 13 of the apparatus may also include a modem or the like to facilitate communication over a (hardwire or wireless) link, respectively. The interface 13 of the apparatus may include a suitable transceiver coupled to one or more antennas or communication means for (hardwire or wireless) communications with the linked or connected device(s), respectively. The interface 13 of the apparatus is generally configured to communicate with at least one other apparatus.

The memory 12 of the apparatus may store respective programs assumed to include program instructions or computer program code that, when executed by the respective processor, enables the respective electronic device or apparatus to operate in accordance with the exemplary embodiments of the present invention. For example, the memory 12 of the apparatus may store keys such as public keys of CBE/CBEs and/or CA/CAs. i.e. act as a key store, or the like.

In general terms, respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "processor configured to [cause the apparatus to] perform xxx-ing" is construed to be equivalent to an expression such as "means for xxx-ing").

In its most basic form, according to exemplary embodiments of the present invention, the apparatus 10 or its processor 11 (possibly together with computer program code stored in the memory 12) is configured to perform retrieving geoscope information being associated with a public key dedicated for verifying signed warning messages of a public warning system, wherein the geoscope information defines a scope of validity of information verifiable by said public key, receiving a signed warning message of the public warning system, verifying a signature of the received signed warning message using said public key, determining whether or not a current location is within the scope defined by the retrieved geoscope information, and accepting the received signed warning message if both the signature of the signed warning message is successfully verified using said public key and the current location is determined to be within the scope defined by the retrieved geoscope information.

Accordingly, stated in other words, the apparatus 10 at least comprises respective means for retrieving geoscope information, means for receiving a signed warning message, means for verifying a signature of the received signed warning message, means for determining whether or not a current location is within the scope defined by the retrieved geoscope information, and means for accepting or rejecting the received signed warning message.

For further details regarding the operability/functionality of individual apparatuses as well as their interconnection or interoperability according to exemplary embodiments of the present invention, reference is made to the above description in connection with any one of Figures to 13, respectively.

According to exemplarily embodiments of the present invention, any one of the processor, the memory and the interface may be implemented as individual modules, chips, chipsets, circuitries or the like, or one or more of them can be implemented as a common module, chip, chipset, circuitry or the like, respectively.

According to exemplarily embodiments of the present invention, a system may comprise any conceivable combination of the thus depicted devices/apparatuses and other network elements, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for geoscoping for enhancing security in public warning systems. Such measures exemplarily comprise retrieving geoscope information being associated with a public key dedicated for verifying signed warning messages of a public warning system, wherein the geoscope information defines a scope of validity of information verifiable by said public key, receiving a signed warning message of the public warning system, verifying a signature of the received signed warning message using said public key, determining whether or not a current location is within the scope defined by the retrieved geoscope information, and accepting the received signed warning message if both the signature of the signed warning message is successfully verified using said public key and the current location is determined to be within the scope defined by the retrieved geoscope information.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

**List of acronyms and abbreviations**

| | |
|---|---|
| 3GPP | 3rd Generation Partnership Project |
| BSC | Base Station Controller |
| BTS | Base Transceiver Station |
| eNB | evolved NodeB (E-UTRAN base station) |
| EDGE | Enhanced Data rates for Global Evolution |
| ETWS | Earthquake and Tsunami Warning service |
| EU-ALERT | European Public Warning System |
| E-UTRAN | Evolved UTRAN |
| CA | Certificate Authority |
| CBC | Cell Broadcast Centre |
| CBE | Cell Broadcast Entity |
| CBS | Cell Broadcast System |
| CMAS | Commercial Mobile Alert System |
| GBA | Generic Bootstrapping Architecture |
| GERAN | GPRS EDGE Radio Access Network |
| GPRS | General Packet Radio Service |
| GPS | Global Positioning System |
| GSM | Global System for Mobile Communication |
| KPAS | Korean Public Alert System |
| LTE | Long Term Evolution |
| LTE-A | Long Term Evolution Advanced |
| MME | Mobility Management Entity |
| MSC | Mobile Switching Center |
| NAF | Network Application Function |
| NAS | Non-Access Stratum |
| OMA DM | Operation and Maintenance Agreement Device Management |
| OTA | Over-The-Air |
| PLAN | Personal Localized Alerting Network |
| PLMN | Public Land Mobile Network |
| PWS | Public Warning System |
| SGSN | Serving GPRS Support Node |
| SMS | Short Message Service |
| RNC | Radio Network Controller |
| UE | User Equipment |
| UMTS | Universal Mobile Telecommunications System |
| USIM | Universal Subscriber Identity Module |
| UTRAN | UMTS Terrestrial Radio Access Network |
| WEA | Wireless Emergency Alerts |

## Claims

1. A method comprising
retrieving geoscope information being associated with a public key dedicated for verifying signed warning messages of a public warning system, wherein the geoscope information defines a scope of validity of information verifiable by said public key,
receiving a signed warning message of the public warning system,
verifying a signature of the received signed warning message using said public key,
determining whether or not a current location is within the scope defined by the retrieved geoscope information, and
accepting the received signed warning message if both the signature of the signed warning message is successfully verified using said public key and the current location is determined to be within the scope defined by the retrieved geoscope information.

2. The method according to claim 1, further comprising
obtaining a certificate on a public key of a cell broadcast entity of the public warning system, which is signed by a public key of a certificate authority of the public warning system,
wherein the certificate comprises an implicit certificate included in the received signed warning message or an explicit certificate included in a received message other than the received signed warning message.

3. The method according to claim 2, wherein
the geoscope information relates to the certificate authority and is associated with the public key of the certificate authority,
the geoscope information is retrieved together with the public key of the certificate authority by receiving a message or inquiring a database, prior to receiving the signed warning message, and
the signature of the received signed warning message is indirectly verified using the public key of the certificate authority, with which the certificate is signed.

4. The method according to claim 2, wherein
the geoscope information relates to the cell broadcast entity and is associated with the public key of the cell broadcast entity,
the geoscope information is retrieved together with the public key of the cell broadcast entity within the certificate, and
the signature of the received signed warning message is directly verified using the public key of the cell broadcast entity, on which the certificate is issued.

5. The method according to claim 2, wherein
the geoscope information relates to the certificate authority and is associated with the public key of the cell broadcast entity,
the geoscope information is retrieved together with the public key of the cell broadcast entity within the certificate, and
the signature of the received signed warning message is directly verified using the public key of the cell broadcast entity, on which the certificate is issued.

6. The method according to claim 2, wherein
the geoscope information relates to the certificate authority and the cell broadcast entity and is associated with the public key of the cell broadcast entity,
the geoscope information is retrieved together with the public key of the cell broadcast entity within the certificate, and
the signature of the received signed warning message is directly verified using the public key of the cell broadcast entity, on which the certificate is issued.

7. The method according to claim 1, wherein
the geoscope information is associated with a public key of a cell broadcast entity of the public warning system, and
the geoscope information is retrieved together with the public key of the cell broadcast entity, prior to receiving the signed warning message, by means of non-access-stratum signaling or by means of transport from a dedicated application server secured on the basis of a generic bootstrapping architecture.

8. The method according to any one of claims 1 to 7, wherein
the geoscope information defines a regulatory domain or a geographical area in a human-readable manner or by a code transformable into human-readable text, and the determining is performed on the basis of a user's knowledge of the current location and the human-readable geoscope information, or
the geoscope information defines a regulatory domain or a geographical area by positioning system coordinates, and the determining is performed on the basis of positioning system coordinates of the current location and the positioning system coordinates of the geoscope information, or
the geoscope information defines a regulatory domain or a geographical area in an electronically processable manner, and the determining is performed on the basis of the current location provided by a network service and the electronically processable geoscope information, or
in case of the geoscope information relating to a certificate authority, the determining is performed on the basis of the retrieved geoscope information and a list of at least one certificate of certificate authorities including associated certificate authority thereof.

9. The method according to any one of claims 1 to 8, wherein
the method is operable at or by a user equipment operable in a cellular communication system, and
the public warning system comprises an Earthquake and Tsunami Warning Service, a Commercial Mobile Alert System, a Wireless Emergency Alerts system, a Personal Localized Alerting Network, a Korean Public Alert System, or a European Public Warning System.

10. An apparatus comprising
means for retrieving geoscope information being associated with a public key dedicated for verifying signed warning messages of a public warning system, wherein the geoscope information defines a scope of validity of information verifiable by said public key,
means for receiving a signed warning message of the public warning system, means for verifying a signature of the received signed warning message using said public key,
means for determining whether or not a current location is within the scope defined by the retrieved geoscope information, and
means for accepting the received signed warning message if both the signature of the signed warning message is successfully verified using said public key and the current location is determined to be within the scope defined by the retrieved geoscope information.

11. The apparatus according to claim 10, further comprising
means for obtaining a certificate on a public key of a cell broadcast entity of the public warning system, which is signed by a public key of a certificate authority of the public warning system,
wherein the certificate comprises an implicit certificate included in the received signed warning message or an explicit certificate included in a received message other than the received signed warning message.

12. The apparatus according to claim 11, wherein
the geoscope information relates to the certificate authority and is associated with the public key of the certificate authority,
the retrieving means is configured to retrieve the geoscope information together with the public key of the certificate authority by receiving a message or inquiring a database, prior to receiving the signed warning message, and
the verifying means is configured to verify the signature of the received signed warning message indirectly using the public key of the certificate authority, with which the certificate is signed.

13. The apparatus according to claim 11, wherein
the geoscope information relates to the cell broadcast entity and is associated with the public key of the cell broadcast entity,
the retrieving means is configured to retrieve the geoscope information together with the public key of the cell broadcast entity within the certificate, and
the verifying means is configured to verify the signature of the received signed warning message directly using the public key of the cell broadcast entity, on which the certificate is issued.

14. The apparatus according to claim 11, wherein
the geoscope information relates to the certificate authority and is associated with the public key of the cell broadcast entity,
the retrieving means is configured to retrieve the geoscope information together with the public key of the cell broadcast entity within the certificate, and
the verifying means is configured to verify the signature of the received signed warning message directly using the public key of the cell broadcast entity, on which the certificate is issued.

15. The apparatus according to claim 11, wherein
the geoscope information relates to the certificate authority and the cell broadcast entity and is associated with the public key of the cell broadcast entity,
the retrieving means is configured to retrieve the geoscope information together with the public key of the cell broadcast entity within the certificate, and
the verifying means is configured to verify the signature of the received signed warning message directly using the public key of the cell broadcast entity, on which the certificate is issued.

16. The apparatus according to claim 10, wherein
the geoscope information is associated with a public key of a cell broadcast entity of the public warning system, and
the retrieving means is configured to retrieve the geoscope information together with the public key of the cell broadcast entity, prior to receiving the signed warning message, by means of non-access-stratum signaling or by means of transport from a dedicated application server secured on the basis of a generic bootstrapping architecture.

17. The apparatus according to any one of claims 10 to 16, wherein
the geoscope information defines a regulatory domain or a geographical area in a human-readable manner or by a code transformable into human-readable text, and the determining means is configured to perform determination on the basis of a user's knowledge of the current location and the human-readable geoscope information, or
the geoscope information defines a regulatory domain or a geographical area by positioning system coordinates, and the determining means is configured to perform determination on the basis of positioning system coordinates of the current location and the positioning system coordinates of the geoscope information, or
the geoscope information defines a regulatory domain or a geographical area in an electronically processable manner, and the determining means is configured to perform determination on the basis of the current location provided by a network service and the electronically processable geoscope information, or
in case of the geoscope information relating to a certificate authority, the determining means is configured to perform determination on the basis of the retrieved geoscope information and a list of at least one certificate of certificate authorities including associated certificate authority thereof.

18. The apparatus according to any one of claims 10 to 17, wherein
the apparatus is operable as or at a user equipment operable in a cellular communication system, and
the public warning system comprises an Earthquake and Tsunami Warning Service, a Commercial Mobile Alert System, a Wireless Emergency Alerts system, a Personal Localized Alerting Network, a Korean Public Alert System, or a European Public Warning System.

19. A computer program product comprising computer-executable computer program code which, when the program code is executed on a computer, is configured to cause the computer to carry out the method according to any one of claims 1 to 9.

20. The computer program product according to claim 19, wherein the computer program product comprises a computer-readable medium on which the computer-executable computer program code is stored, and/or wherein the program is directly loadable into an internal memory of the processor.
